(19) Europäisches Patentamt
European Patent Office
Office européen des brevets

(11) Veröffentlichungsnummer: **0 374 668**
**A2**

(12) # EUROPÄISCHE PATENTANMELDUNG

(21) Anmeldenummer: **89122799.3**

(51) Int. Cl.5: **C09D 11/00**

(22) Anmeldetag: **11.12.89**

(30) Priorität: **16.12.88 DE 3842382**

(43) Veröffentlichungstag der Anmeldung:
**27.06.90 Patentblatt 90/26**

(84) Benannte Vertragsstaaten:
**CH DE ES FR GB IT LI**

(71) Anmelder: **A.W. Faber - Castell GmbH & Co.**
**Nürnberger Strasse 2**
**D-8504 Stein(DE)**

(72) Erfinder: **Stengel, Rudolf**
**Gleimstrasse 17**
**D-8500 Nürnberg(DE)**

(54) **Fluoreszierende Markierungsflüssigkeit.**

(57) Es wird eine fluoreszierende wäßrige Markierungsflüssigkeit beschrieben, welche den Cumarin-Farbstoff C. J. Basic Yellow 40 in Mengen von 0,2 bis 2,0 Gew% enthält. Die Flüssigkeit ist auf einen pH-Wert von 3-5 gepuffert; sie enthält als Stützharz eine bei pH 3-5 beständige Acrylharz-Dispersion mit einer Teilchen-Agglomeratgröße von 35- 150nm. Die Flüssigkeit greift Drittfarbstoffe, insbesondere Triphenylmethanfarbstoffe, wie sie häufig in Durchschlagpapieren verwendet werden, nicht an und ist auch auf glatten Oberflächen wie Glas, Kunststoff-Folie oder Glanzpapieren zu verwenden.

EP 0 374 668 A2

Xerox Copy Centre

Die Erfindung betrifft eine fluoreszierende wäßrige Markierungsflüssigkeit mit Gehalten an Cumarin-Farbstoff C. J. Basic Yellow 40 sowie gegebenenfalls noch weiteren Farbstoffen, ferner mit Gehalten an synthetischen Harzen und gegebenenfalls mehrwertigen Alkoholen, wie Glykol oder dessen Oligomeren.

Aus der deutschen Offenlegungsschrift 25 07 064 sind wäßrige Schreib- und Markierungsflüssigkeiten bekannt, denen zur Unterstützung der Fluoreszenz-Wirkung Kunstharze, z. B. Polyacrylate, zugesetzt worden sind. Als Farbstoffe sind verschiedene Produkte genannt, u. a. der Cumarin-Farbstoff C. J. Basic Yellow 40, der von der Firma Ciba-Geigy unter dem Namen Maxilonbrillantflavin 10 GFF in den Handel gebracht wird. Wesentlich an den in dieser Veröffentlichung beschriebenen Produkten ist, daß die Tinte als Ganzes alkalisch reagiert, was erforderlich ist, um die genannten Polyacrylharze in Lösung zu halten.

Aus der deutschen Auslegeschrift 23 15 680 ist eine Markierungsflüssigkeit bekannt, die als Fluoreszenz-Farbstoff Hydroxypyrentrisulfonsäure enthält. Grundlage der genannten Veröffentlichung ist die Erkenntnis, daß Markierungsflüssigkeiten mit diesem Fluoreszenz-Farbstoff auf einen pH-Wert eingestellt werden sollten, der im alkalischen Bereich liegt und vorzugsweise Werte oberhalb 8,5 besitzt. Erst in diesem pH-Bereich entfaltet sich nämlich die Intensität der Leuchtwirkung des genannten Fluoreszenz-Farbstoffes vollständig.

So vorteilhaft die Einstellung der Markierungsflüssigkeit auf alkalische pH-Werte in bezug auf die Fluoreszenzwirkung und die Leuchtkraft des Farbstriches auch sein mag, als so nachteilig kann sich in anderen Fällen die Alkalität der Markierungsflüssigkeit erweisen. Insbesondere wenn die Markierungsflüssigkeit auf Durchschreibpapieren angewandt werden soll, welche Triphenylmethan-Farbstoffe - beispielsweise in mikroverkapselter Form - enthalten, kann die alkalische Reaktion der Flüssigkeiten dazu führen, daß diese Verbindungen in die nicht-farbige Leukoform überführt werden und die Schrift dadurch gelöscht wird.

Der Erfindung liegt die Aufgabe zugrunde, eine fluoreszierende wäßrige Markierungsflüssigkeit vorzuschlagen, welche einerseits einen hinreichend intensiven fluoreszierenden Strich bei guter Lichtbeständigkeit hinterläßt, die andererseits aber ohne Einfluß auf Farbstoffe, insbesondere Triphenylmethan-Farbstoffe verbleibt, wie sie z. B. in Durchschreibpapieren angewandt werden.

Die Lösung der Aufgabe beruht auf der Erkenntnis, daß der an sich bekannte Cumarin-Farbstoff C. J. Basic Yellow 40 nicht nur im alkalischen, sondern auch im sauren pH-Bereich, als Markierungssubstanz eingesetzt werden kann und daß Flüssigkeiten in diesem pH-Bereich praktisch ohne Einfluß auf die genannten Drittfarbstoffe insbesondere Triphenylmethan-Farbstoffe sind. Der Verwirklichung dieser Erkenntnis standen aber bisher Schwierigkeiten im Wege. Einerseits wurde beobachtet, daß auch im sauren pH-Bereich auf den Zusatz von Stützharzen, die der Intensivierung der Färbung dienen und die das Durchschlagen des Striches durch das Trägerpapier verhindern, nicht verzichtet werden kann. Harze, beispielsweise Polyacrylharze, die diese Wirkung zeigen und die im sauren pH-Bereich echt löslich sind, stehen aber nicht zur Verfügung. Durch Versuche der Erfinder wurde nun festgestellt, daß an die Stelle von echt löslichen Harzen bestimmte saure Acrylat-Dispersionen treten können, welche die Eigenschaft haben, im pH-Bereich von 3-5, also dem hier in Betracht kommenden sauren Bereich, ihre fein dispergierte Form beizubehalten, wobei die Acrylharz-Dispersionen Teilchen-Agglomerate von 35-150nm aufweisen. Die Größe dieser Agglomerate gestattet es, Markierungsflüssigkeiten, in denen solche Acrylharz-Dispersionen enthalten sind, in den üblichen Docht-Markierungsgeräten einzusetzen, ohne daß es zu Verstopfungen des Dochtes oder zu Ablagerungen der Flüssigkeiten im Tampon der Geräte kommt.

Es hat sich erwiesen, daß geeignete Acrylharze Copolymerisate aus Methylmethacrylaten, Butylacrylaten und Methacrylsäure sind. Die Copolymerisate können durch die nachfolgend wiedergegebenen idealisierten Strukturformeln beschrieben werden:

Formel I:

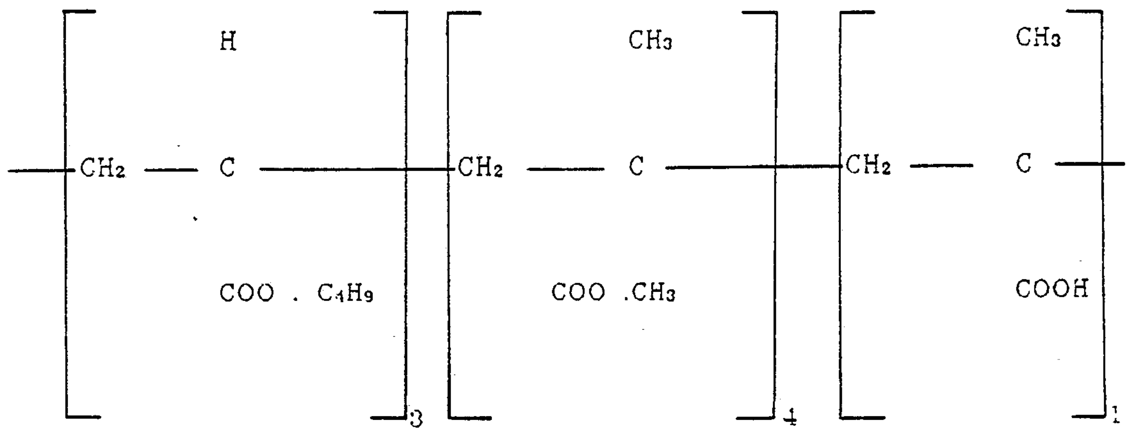

Formel II:

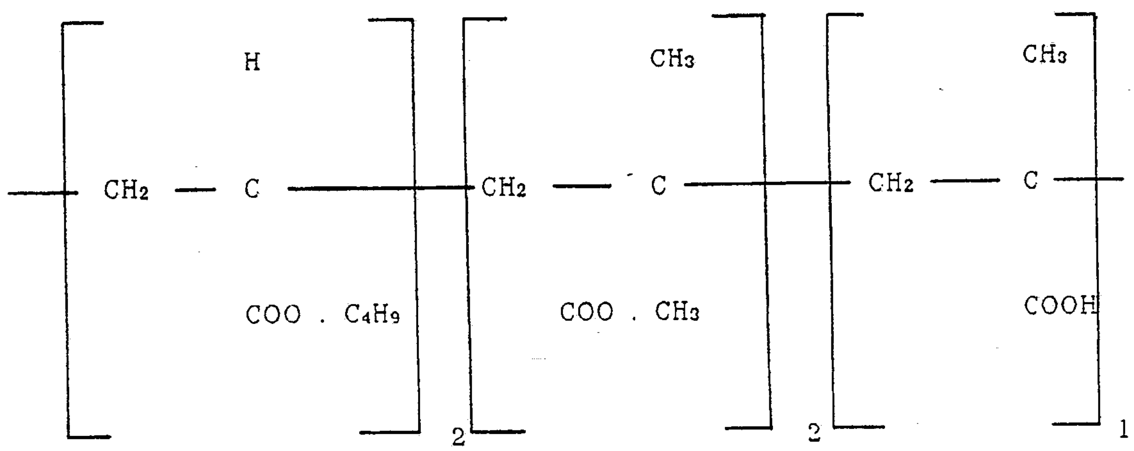

Bei dem Versuch, sauer eingestellte fluoreszierende Markierungsflüssigkeiten unter Verwendung von Cumarin-Farbstoffen und den genannten Stützacrylat-Dispersionen herzustellen, hat es sich als zweckmäßig erwiesen, die Markierungsflüssigkeit auf einen pH-Wert von 3-5 einzustellen, sie insbesondere auf diesen pH-Wert zu puffern. Hierzu wird vorgeschlagen, als Basislösung für die Herstellung der Markierungsflüssigkeit einen an sich bekannten Citrat-Puffer oder auch Citrat-Phosphat-Puffer oder andere bekannte Pufferlösungen zu verwenden. Eine erfindungsgemäß zusammengesetzte sauer reagierende und Drittfarbstoffe nicht beeinflussende Markierungsflüssigkeit kann beispielsweise die nachfolgend genannte Zusammensetzung aufweisen:

| | |
|---|---|
| Wäßrige Pufferlösung (pH zwischen 3 und 5) | 40 - 50 Gew% |
| Farbstoff Maxilonbrillantflavin 10 GFF | 0,2 - 2,0 Gew% |
| wäßrige Acrylatdispersion (pH ca. 3) | 40 - 50 Gew% |

mit der Maßgabe, daß die Summe der Bestandteile 100 Gew% ergibt.

Zur weiteren Abwandlung der Markierungsflüssigkeiten wird vorgeschlagen, der Flüssigkeit noch Polyvinylpyrolidon (Typ K15) als Mittel zur geringfügigen Erhöhung der Viskosität sowie gegebenenfalls noch geeignete Tenside zuzusetzen, letztere, um die Benetzungsfähigkeit der Flüssigkeit auf Papieren zu erhöhen. Als geeignetes Tensid kommt insbesondere alkylbenzolsulfonsaures Natrium in Betracht. Auch an

sich bekannte Zusätze von Glykol, Diglykol oder Triglykol einzeln oder zu mehreren oder auch in Mischung mit Hexantriol in Mengen von insgesamt bis zu 10 Gew% kommen in Betracht, um das Trocknungsverhalten der Markierungsflüssigkeit zu beeinflussen.

Als Basispufferlösung kann eine Lösung verwendet werden, die in einem Liter folgende Bestandteile enthält:

4,48 g NaOH

11,76 g Zitronensäuremonohydrat

4,31 ml HCl 32%ig

Eine derart zusammengesetzte Pufferlösung weist einen pH-Wert von 3,7 auf. Sie hat sich bei der praktischen Ausführung der Erfindung bewährt.

Markierungsflüssigkeiten der hier beschriebenen Art ergeben ohne weitere Zusätze einen hellgelben Strich. Der Strich fluoresziert bei Tageslicht im feuchten und auch im getrockneten Zustand. Die Flüssigkeit bleibt ohne Einfluß auf Drittfarbstoffe, die in den üblichen Papieren, auch Durchschreibpapieren, enthalten sind. Als besonders vorteilhaft hat es sich erwiesen, daß die Flüssigkeit auch zum Schreiben oder Markieren auf glatten Oberflächen, wie Glas, Kunststoff-Folien oder Glanzpapier verwendet werden kann. Manche im Handel befindlichen Markierungsflüssigkeiten sind auf diesen Oberflächen nicht zu verwenden, da sie keinen zusammenhängenden Strich ergeben.

Die Farbe der Markierungsflüssigkeit kann in bekannter Weise dadurch abgewandelt werden, daß der Flüssigkeit noch weitere Farbstoffe zugesetzt werden, die sich dem gelben Cumarin-Farbstoff unter Bildung eines andersfarbigen Striches, beispielsweise eines orange-farbenen oder eines grünes Striches überlagern.

## Ansprüche

1. Fluoreszierende wäßrige Markierungsflüssigkeit mit Gehalten an Cumarin-Farbstoff C. J. Basic Yellow 40 sowie gegebenenfalls noch weiteren Farbstoffen, ferner mit Gehalten an synthetischen Harzen und gegebenenfalls mehrwertigen Alkoholen, wie Glykol oder dessen Oligomeren,
**dadurch gekennzeichnet,**
daß die Markierungsflüssigkeit auf einen pH-Wert von 3-5 eingestellt ist und eine bei diesem pH-Wert beständige Acrylharz-Dispersion enthält.

2. Markierungsflüssigkeit nach Anspruch 1,
**dadurch gekennzeichnet,**
daß die Acrylharz-Dispersion Teilchen-Agglomerate von 35-150nm enthält.

3. Markierungsflüssigkeit nach Anspruch 1 oder 2,
**dadurch gekennzeichnet,**
daß die Flüssigkeit auf einen pH-Wert von 3-5 gepuffert ist.

4. Markierungsflüssigkeit nach einem der Ansprüche 1 bis 3,
**gekennzeichnet durch folgende Zusammensetzung**

| | |
|---|---|
| - Wäßrige Pufferlösung (pH 3-5) | 40 - 50 Gew%; |
| - Farbstoff Maxilonbrillantflavin 10 GFF | 0,2 - 2,0 Gew%; |
| - wäßrige Acrylat-Dispersion (pH3) | 40 - 50 Gew% |

mit der Maßgabe, daß die Summe der Bestandteile 100 Gew% ergibt.

5. Markierungsflüssigkeit nach einem der Ansprüche 1 bis 4,
**dadurch gekennzeichnet,**
daß die Flüssigkeit zusätzlich Polyvinylpyrolidon (Typ K15) in Mengen bis zu 5 Gew% und/oder alkylbenzolsulfonsaures Natrium in Mengen bis zu 2 Gew% enthält.

6. Markierungsflüssigkeit nach einem der Ansprüche 1 bis 5,
**dadurch gekennzeichnet,**
daß die Flüssigkeit zusätzlich Glykol, Diglykol und/oder Triglykol und/oder Hexantriol in Mengen von insgesamt bis zu 10 Gew% enthält.

7. Verwendung, einer fluoreszierenden Markierungsflüssigkeit nach einem der Ansprüche 1 bis 6 auf glatten Oberflächen wie Glas, Kunststoff-Folien oder Glanzpapier.